# EUROPÄISCHE PATENTANMELDUNG

(11) **EP 1 136 955 A2**
(43) Veröffentlichungstag der Anmeldung: **26.09.2001**
(21) Anmeldenummer: 01106792.3
(22) Anmeldetag: 19.03.2001
(51) Int. Cl.: G07C 9/00

(54) **Anordnung für ein Zugangssicherungssystem**

(30) Priorität: 20.03.2000 DE 10013542
(71) Anmelder: Philips Corporate Intellectual Property GmbH, 52064 Aachen (DE); Koninklijke Philips Electronics N.V., 5621 BA Eindhoven (NL)
(72) Erfinder: Nowottnick, Jürgen, Philips Corp.Intell.Prop.GmbH, 52064 Aachen (DE); Böh, Frank, Philips Corp.Intell.Prop.GmbH, 52064 Aachen (DE)
(74) Vertreter: Volmer, Georg, Dipl.-Ing.

(57) **Zusammenfassung**

Beschrieben wird die Konfiguration eines Zugangssicherungssystems, im folgenden auch als "Passive Keyless Entry-System" (PKE) bezeichnet, welches eine stark verbesserte Resistenz gegenüber externen Angriffen besitzt. Das erfindungsgemäße System ist im Bereich der Kraftfahrzeug-Zugangssysteme einsetzbar und eignet sich darüber hinaus auch zur Realisierung von sicheren Zugangssystemen auf der Basis von Chipkarten im Bereich der Gebäudesicherung.

Die Erfindung hat die Aufgabe, eine Anordnung der vorstehenden Art so auszubilden, dass eine "Relais-Attacke" zumindest wesentlich erschwert, wenn möglich sogar vollständig verhindert werden kann.

Die Erfindung macht ein verbessertes Zugangssicherungssystem ("Passive Keyless Entry System") verfügbar, in dem zusätzliche Information über die relative Orientierung bzw. Positionierung zwischen einem Datenträger (PKE-Karte) und einer Basisstation, die vorzugsweise in einem Fahrzeug angeordnet ist, gewonnen wird. Diese Information, als Positionsinformation bezeichnet, wird dazu genutzt, den Ursprung von Daten während des Authentifikationsvorgangs im Zugangssicherungssystem zu verifizieren. Der Datenträger enthält M Antennenspulen, die orthogonal zueinander angeordnet sind, sowie eine UHF-Sendestufe. Die Basisstation umfasst N Antennenspulen; diese sind bei einer Anordnung des erfindungsgemäßen Zugangssicherungssystems an einem Fahrzeug an diesem angeordnet. Zusätzlich ist die Basisstation mit einer weiteren Anzahl - typischerweise, aber nicht notwendig, gleich N - von UHF-Empfangsstufen ausgestattet. In einem ersten Schritt wird vom Datenträger (PKE-Karte) die eigene Orientierung relativ zu den Antennenspulen der Basisstation gemessen und berechnet. In einem zweiten Schritt wird die so erhaltene Positionsinformation vom Datenträger vorzugsweise in verschlüsselter Form an die Basisstation übertragen. Von der Basisstation wird ihrerseits die Orientierung des Datenträgers aus Phasen- oder Amplitudendifferenzen in dem von den UHF-Empfangsstufen der Basisstation empfangenen UHF-Signal gemessen und berechnet.Die zwei auf diese Weise unabhängig voneinander erhaltenen Positionsinformationen werden verglichen, und nur, wenn sie innerhalb vorgegebener Messtoleranzen übereinstimmen, wird die Zugangsberechtigung erteilt.

## Beschreibung

### Anwendungsgebiete der Erfindung

Die vorliegende Erfindung beschreibt die Konfiguration eines Zugangssicherungssystems, im folgenden auch als "Passive Keyless Entry-System" (PKE) bezeichnet, welches eine stark verbesserte Resistenz gegenüber externen Angriffen besitzt. PKE-Systeme werden in zunehmenden Maße im Bereich der Kraftfahrzeug-Zugangssysteme eingesetzt.

Das erfindungsgemäße System eignet sich darüber hinaus auch zur Realisierung von sicheren Zugangssystemen auf der Basis von Chipkarten im Bereich der Gebäudesicherung.

### Hintergrund der Erfindung

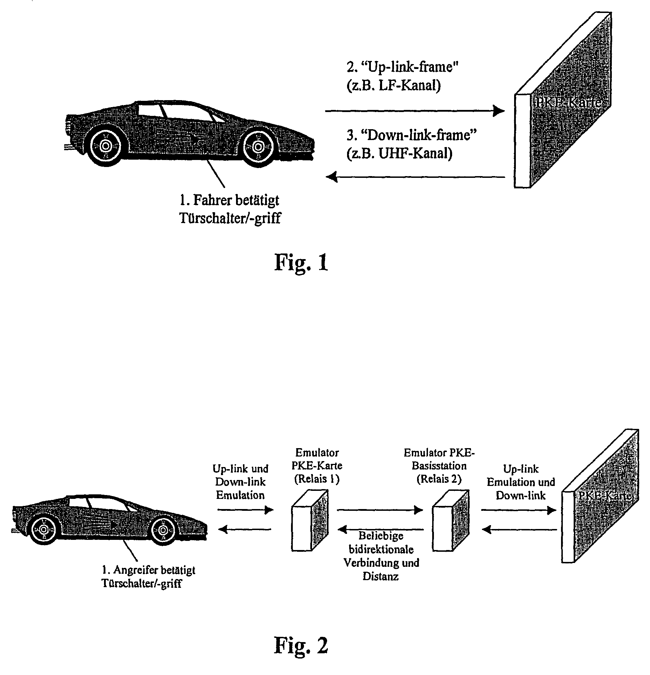

Eine mögliche Konfiguration zur Realisierung von PKE-Systemen ist in Figur 1 der Zeichnung am Beispiel eines Zugangssicherungssystems für ein Fahrzeug 1 wiedergegeben. Zwischen dem Fahrzeug 1 und einer Chipkarte, hier als PKE-Karte bezeichnet, bestehen als Signalübertragungsverbindungen ein sogenannter "Up-link-frame" 2, beispielsweise durch einen LF-Kanal gebildet, über den Signale vom Fahrzeug zur PKE-Karte übertragen werden, und ein sogenannter "Down-link-frame" 3, beispielsweise durch einen UHF-Kanal gebildet, über den Signale von der PKE-Karte zum Fahrzeug übertragen werden.

Nach Betätigung zum Beispiel des Türgriffs des Fahrzeuges, oder eines Tasters an der Tür, beginnt eine PKE-Basisstation im Fahrzeug ein als "Challenge" bezeichnetes Signal zu generieren, das über den "Up-link-frame" 2 (bevorzugt als LF-Kanal mit induktiver Kopplung ausgebildet) zur PKE-Karte übertragen wird. Daraufhin berechnet eine vorzugsweise mit einem Mikroprozessor ausgestaltete Schaltungsanordnung in der PKE-Karte mittels eines kryptographischen Algorithmus und eines geheimen Schlüssels aus der "Challenge" eine als "Response" bezeichnete Signalfolge. Dieses "Response"-Signal wird dann von der PKE-Karte über den "Down-link-frame" 3 (bevorzugt unter Verwendung eines UHF-Kanals) zur PKE-Basisstation übertragen,. Die PKE-Basisstation vergleicht die "Response" mittels eines gleichen Kryptoalgorithmus und eines gleichen geheimen Schlüssels. Bei Identität veranlasst die PKE-Basisstation die Öffnung des Fahrzeugs.

Der Nachteil dieser Anordnung besteht darin, dass ein externer Angreifer, der das Fahrzeug zu öffnen versucht, die sogenannte "Relais-Attacke" mit relativ geringem technischem Aufwand durchführen kann.

In Figur 2 ist schematisch eine Anordnung zur Durchführung einer solchen "Relais-Attacke" wiedergegeben. Dazu wird in die Konfiguration nach Figur 1 eine zusätzliche Übertragungsstrecke, bestehend aus einem Emulator PKE-Karte, als Relais 1 bezeichnet, einem Emulator PKE-Basisstation, als Relais 2 bezeichnet, und einer Nachrichtenverbindung zwischen Relais 1 und Relais 2. Ein Angreifer befindet sich mit Relais 1 unmittelbar am Fahrzeug. Der zweite Angreifer begibt sich mit Relais 2 in ausreichende Nähe zur gültigen PKE-Karte. Mit Betätigung des Türgriffs sendet das Fahrzeug seine "Challenge", die vom Relais 1 über die genannte Nachrichtenverbindung zum Relais 2 weitergeleitet wird. Relais 2 emuliert den "Up-link-frame" und gibt so die "Challenge" an die gültige PKE-Karte weiter. Nach einer Berechnung der "Response" in der PKE-Karte antwortet die PKE-Karte dem Relais 2 durch Übersendung dieser "Response", d.h. das Relais 2 überträgt die "Response" über die genannte Nachrichtenverbindung an das Relais 1 und von diesem an die PKE-Basisstation im Fahrzeug 1. Da die "Response" von der authentischen PKE-Karte auf Grundlage der authentischen "Challenge" der PKE-Basisstation mit Hilfe des richtigen Kryptoalgorithmus und des richtigen Schlüssels erzeugt wurde, wird die "Response" als gültig anerkannt und die Fahrzeugtür öffnet sich.

### Aufgabe der Erfindung

Die Erfindung hat die Aufgabe, eine Anordnung der vorstehenden Art so auszubilden, dass eine "Relais-Attacke" zumindest wesentlich erschwert, wenn möglich sogar vollständig verhindert werden kann.

### Beschreibung der Erfindung

Erfindungsgemäß wird diese Aufgabe gelöst durch eine Anordnung für ein Zugangssicherungssystem ("Passive Keyless Entry System") mit einer Basisstation, die an einem gegen unbefugten Zugang zu sichernden Objekt, z.B. einem Fahrzeug, angeordnet ist, und einem vorzugsweise von einem befugten Benutzer mitführbaren Datenträger ("PKE-Karte"), insbesondere einer Chipkarte, der mit der Basisstation zur Feststellung einer Zugangsberechtigung und entsprechenden Steuerung der Basisstation zum Austauschen von Signalen mit der Basisstation eingerichtet ist, wobei eine Signalübertragung von der Basisstation an den Datenträger vorzugsweise durch niederfrequente, magnetische Wechselfelder und eine Signalübertragung vom Datenträger an die Basisstation vorzugsweise durch hochfrequente elektromagnetische Wechselfelder (UHF-Bereich) vorgenommen ist, in welcher
- die Basisstation eine erste Anzahl (N) von LF-Sendestufen und zu jeder LF-Sendestufe eine Antennenspule zum Übertragen niederfrequenter, magnetischer Wechselfelder sowie eine zweite Anzahl von UHF-Empfangsstufen aufweist,
- der Datenträger eine zweite Anzahl (M) orthogonal zueinander ausgerichteter Antennenspulen aufweist, die jede mit einer LF-Empfangsstufe zum Empfangen niederfrequenter, magnetischer Wechselfelder gekoppelt sind,
- der Datenträger ferner eine UHF-Sendestufe aufweist zum Aussenden eines UHF-Signals,
- die Basisstation eine dritte Anzahl von UHF-Empfangsstufen umfasst zum Empfangen des von der UHF-Sendestufe des Datenträgers ausgesandten UHF-Signals,
- die Basisstation und der Datenträger je eine Steuerstufe umfassen zum Steuern der LF- bzw. UHF-Sende- bzw. -Empfangsstufen und zum Erzeugen zu sendender sowie zum Auswerten empfangener Signale,
- aus einer Messung der von den LF-Sendestufen der Basisstation auf den Datenträger übertragenen, niederfrequenten, magnetischen Wechselfelder über die Antennenspulen des Datenträgers in der Steuerstufe des Datenträgers eine erste Positionsinformation über die relative Position des Datenträgers zu den Antennenspulen der Basisstation gewonnen und in vorzugsweise verschlüsselter Form im UHF-Signal vom Datenträger an die Basisstation übertragen wird,
- aus einer anschließenden Messung des von der UHF-Sendestufe des Datenträgers auf die Basisstation übertragenen UHF-Signals über die UHF-Empfangsstufen der Basisstation in der Steuerstufe der Basisstation eine zweite Positionsinformation über die relative Position des Datenträgers zu den UHF-Empfangsstufen der Basisstation gewonnen wird,
- durch Vergleich der beiden Positionsinformationen in der Steuerstufe der Basisstation ein die Zugangsberechtigung darstellendes Signal nur dann erzeugt wird, wenn die beiden Positionsinformationen sich um weniger als ein vorgegebenes Maß unterscheiden.

Die erfindungsgemäße Anordnung macht somit ein verbessertes Zugangssicherungssystem ("Passive Keyless Entry System") verfügbar, in dem zusätzliche Information über die relative Orientierung bzw. Positionierung zwischen einem Datenträger (PKE-Karte) und einer Basisstation, die vorzugsweise in einem Fahrzeug angeordnet ist, gewonnen wird. Diese Information, als Positionsinformation bezeichnet, wird dazu genutzt, den Ursprung von Daten während des Authentifikationsvorgangs im Zugangssicherungssystem zu verifizieren. Der Datenträger enthält M Antennenspulen, die orthogonal zueinander angeordnet sind, sowie eine UHF-Sendestufe. Die Basisstation umfasst N Antennenspulen; diese sind bei einer Anordnung des erfindungsgemäßen Zugangssicherungssystems an einem Fahrzeug an diesem angeordnet. Zusätzlich ist die Basisstation mit einer weiteren Anzahl - typischerweise, aber nicht notwendig, gleich N - von UHF-Empfangsstufen ausgestattet. In einem ersten Schritt wird vom Datenträger (PKE-Karte) die eigene Orientierung relativ zu den Antennenspulen der Basisstation gemessen und berechnet. In einem zweiten Schritt wird die so erhaltene Positionsinformation vom Datenträger vorzugsweise in verschlüsselter Form an die Basisstation übertragen. Von der Basisstation wird ihrerseits die Orientierung des Datenträgers aus Phasen- oder Amplitudendifferenzen in dem von den UHF-Empfangsstufen der Basisstation empfangenen UHF-Signal gemessen und berechnet.Die zwei auf diese Weise unabhängig voneinander erhaltenen Positionsinformationen werden verglichen, und nur, wenn sie innerhalb vorgegebener Messtoleranzen übereinstimmen, wird die Zugangsberechtigung erteilt.

Diese Anordnung ist vorteilhaft einsetzbar in Zugangssicherungssystemen allgemeiner Art, insbesondere aber in Fahrzeugen, und für kontaktlose Triangulation.

Vorzugsweise ist die erfindungsgemäße Anordnung derart ausgestaltet, dass die beiden Positionsinformationen durch Messung der Feldstärken und/oder der Phasenunterschiede der magnetischen Wechselfelder an den Orten der mit je einer der LF-Empfangsstufen gekoppelten Antennenspulen des Datenträgers bzw. des UHF-Signals an den Orten der UHF-Empfangsstufen der Basisstation ermittelt werden.

Die erfindungsgemäße Anordnung gewährleistet durch die beschriebene Feststellung der Positionsinformationen, dass eine Zugangsberechtigung nur korrekt von der berechtigten Person erlangt und nicht durch eine "Relais-Attacke" simuliert werden kann.

### Beschreibung eines bevorzugten Ausführungsbeispiels der Erfindung

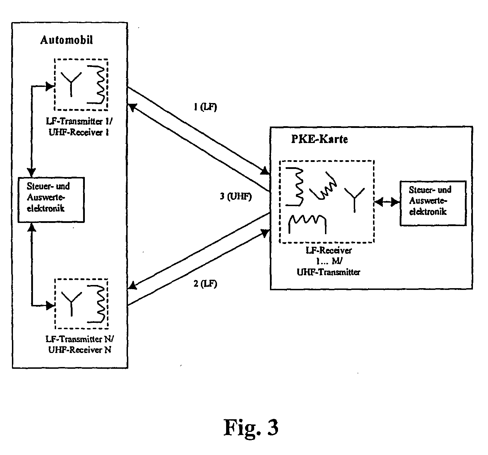

Figur 3 zeigt schematisch den Aufbau eines Ausführungsbeispiels eines gegenüber externen Attacken erheblich resistenteren PKE-Systems.

Eine in ansonsten üblicher Weise als mit Antennenspulen ausgestattete Chipkarte ausgebildete PKE-Karte nach einem solchen System weist eine Anzahl M Antennenspulen auf, die orthogonal zueinander ausgerichtet sind, so dass mit einer Anzahl von M mindestens gleich 3 Antennenspulen der dreidimensionale Raum "aufgespannt" wird. Jede der M Antennenspulen ist auf der PKE-Karte mit einer als "LF-Receiver" bezeichneten Empfangsstufe zum Empfangen eines LF-Kanals verbunden.

Die erfindungsgemäße Anordnung umfasst ferner eine PKE-Basisstation, die eine Anzahl N Antennenspulen aufweist. Diese N Antennenspulen sollen möglichst weit räumlich getrennt am oder im Fahrzeug angebracht sein, und (bei einer Anzahl N von mindestens 3) bevorzugt ebenfalls einen Raum "aufspannen". Jede der N Antennenspulen der PKE-Basisstation ist mit einer als "LF-Transmitter" bezeichneten, zugehörigen Sendestufe zur Speisung eines LF-Kanals verbunden.

Die PKE-Basisstation weist ferner eine Anzahl von als "UHF-Receiver" bezeichneten UHF-Empfangsstufen auf. Für die Positionierung der "UHF-Receiver" der PKE-Basisstation am Fahrzeug gilt sinngemäß das Gleiche wie für die N mit den "LF-Transmittern" verbundenen Antennenspulen der PKE-Basisstation. Im Ausführungsbeispiel der Figur 3 ist die Anzahl und sind die Positionen der "UHF-Receiver" mit der Anzahl und den Positionen der "LF-Transmitter" und den mit ihnen verbundenen Antennenspulen übereinstimmend gewählt, doch müssen die Anzahl und Positionen der "UHF-Receiver" nicht notwendigerweise mit denen der "LF-Transmitter" übereinstimmen. Als mindeste Anzahlen sind N=2 und M=3 vorgesehen; die Sicherheit des erfindungsgemäßen Systems ist durch Erhöhen auf N=3 für die "LF-Transmitter" und "UHF-Receiver" weiter verbesserbar.

Den "UHF-Receivern" der Basisstation steht in der PKE-Karte eine als "UHF-Transmitter" bezeichnete UHF-Sendestufe gegenüber. Diese sendet ein UHF-Signal aus, welches von den "UHF-Receivern" der Basisstation empfangen wird.

Das erfindungsgemäße System enthält ferner sowohl in der PKE-Karte als auch in der PKE-Basisstation je eine Steuerstufe, als "Steuer- und Auswerteelektronik" bezeichnet, zum Steuern der Sende- und Empfangsstufen und der mit ihrer Hilfe vorzunehmenden Signalübertragungen.

Die Arbeitsweise dieses Ausführungsbeispiels der erfindungsgemäßen Anordnung ist folgende.

Im ersten Schritt berechnet die PKE-Karte ihre eigene Orientierung und ihren Ort relativ zu den Feldern der N Antennenspulen der PKE-Basisstation. Dazu werden die N Antennenspulen der PKE-Basisstation in einer definierten und der PKE-Karte bekannten Reihenfolge nacheinander für eine kurze Zeit eingeschaltet und senden ihr magnetisches Feld aus. Dies ist in Figur 3 mit den Bezugsziffern 1(LF) und 2(LF) bezeichnet. Von der Steuerstufe der PKE-Karte wird dabei jedes Mal an ihren M Antennenspulen die Amplitude der dadurch induzierten Spannung gemessen. Anhand des Verhältnisses der gemessenen Amplituden kann von der Steuerstufe der Karte die Orientierung jedes der N Magnetfelder relativ zur Karte berechnet werden. Zusätzlich kann zur Rechengrundlage auch der geometrische Mittelwert der gemessenen Amplituden hinzugezogen werden. Nach Ausführung aller Messungen und Bestimmung der relativen Orientierung zu allen N Magnetfeldern kann die Steuerstufe der Karte aus den so gewonnenen Orientierungsinformationen (die als Richtungsvektoren darstellbar sind) ihre relative Position zu den Antennen der PKE-Basisstation (und damit zum Fahrzeug) in der Ebene (für den Fall, dass ein System mit N=2 errichtet ist) oder sogar im Raum (für den Fall, dass ein System mit N=3 errichtet ist) bestimmen.

Im zweiten Schritt überträgt die PKE-Karte die so gewonnenen, relativen Ortsinformationen verschlüsselt mit Hilfe eines Kryptoalgorithmus und eines geheimen Schlüssels an die UHF-Antennen der PKE-Basisstation. Dieser Übertragungsvorgang ist in Figur 3 mit der Bezugsziffer 3 bezeichnet. Dabei - oder wahlweise analog zum ersten Schritt in einer separaten Messphase, während der die PKE-Karte ein konstantes UHF-Signal aussendet - messen die "UHF-Receiver" der PKE-Basisstation - Idealerweise gleichzeitig - die Feldstärke des empfangenen UHF-Signals (Empfangssignalstärke) und/oder die Phasenlage des empfangenen UHF-Signals zwischen den "UHF-Receivern". Aus diesen Informationen wird in der PKE-Basisstation (analog zum ersten Schritt) die relative Position der das UHF-Signal aussendenden PKE-Karte in bezug auf die "UHF-Receiver" (und damit auf das Fahrzeug) berechnet.

Im dritten Schritt werden die von beiden Kommunikationspartnern PKE-Karte und PKE-Basisstation ermittelten Positionsinformationen in der PKE-Basisstation verglichen. Nur wenn die Positionsinformationen sich höchstens um ein Maß unterscheiden, das durch die Toleranzen der Messelektronik entsteht, wird von der PKE-Basisstation ein Signal zum Öffnen der Fahrzeugtür abgegeben. Falls sich jedoch die ermittelten Positionsinformationen stärker unterscheiden, deutet dies auf einen potentiellen Angriff hin. Die PKE-Basisstation sperrt in diesem Fall das Öffnen der Tür. Der potentielle Angriff wird durch dieses Vorgehen vereitelt.

### Vorteile der Erfindung

Die vorliegende Erfindung hat folgende Vorteile:
- Realisierung eines gegen externe Angriffe stark resistenten PKE-Systems (Starkes Erschweren der sogenannten "Relais-Attacke")
- Die erfindungsgemäße Einführung zusätzlicher Lage- bzw. Orientierungsinformationen erschwert Angriffe auf das System in hohem Maße
- Die Verschlüsselung der übertragenen Ortsinformationen erhöht die Systemsicherheit zusätzlich
- Durch Multiplexen mit anderen Signalen wird eine kostengünstige Mehrfachnutzung ohnehin vorhandener Hardware im Fahrzeug oder der Elektronik einer Raum-Zutrittskontrolle ermöglicht
- Die Erfindung ermöglicht eine Erhöhung der Sicherheit und Messgenauigkeit durch Erhöhung der Anzahl der Antennenspulen für den LF-Kanal bzw. die LF-Kanäle und / oder durch Erhöhung der Anzahl der "UHF-Receiver"

### Ausgestaltungen der Erfindung

In Abwandlungen der erfindungsgemäßen Anordnung können die folgenden Maßnahmen vorgesehen sein:
- Die Ortsinformation kann entweder aus der Feldstärke und/oder aus Phasenunterschieden ermittelt werden
- Die Anzahl N der "Receiver" auf Seiten des Fahrzeugs und die Anzahl M der Antennenspulen auf Seiten der PKE-Karte kann variiert werden
- Eine automatische Kalibrierung der Systeme und Erhöhung der Messgenauigkeit durch Referenzmessungen (sowohl der Antennenspulen der PKE-Karte als auch der "UHF-Receiver") ist möglich.

## Patentansprüche

1. Anordnung für ein Zugangssicherungssystem ("Passive Keyless Entry System") mit einer Basisstation, die an einem gegen unbefugten Zugang zu sichernden Objekt, z.B. einem Fahrzeug, angeordnet ist, und einem vorzugsweise von einem befugten Benutzer mitführbaren Datenträger ("PKE-Karte"), insbesondere einer Chipkarte, der mit der Basisstation zur Feststellung einer Zugangsberechtigung und entsprechenden Steuerung der Basisstation zum Austauschen von Signalen mit der Basisstation eingerichtet ist, wobei eine Signalübertragung von der Basisstation an den Datenträger vorzugsweise durch niederfrequente, magnetische Wechselfelder und eine Signalübertragung vom Datenträger an die Basisstation vorzugsweise durch hochfrequente elektromagnetische Wechselfelder (UHF-Bereich) vorgenommen ist,
**dadurch gekennzeichnet, dass**
• die Basisstation eine erste Anzahl (N) von LF-Sendestufen und zu jeder LF-Sendestufe eine Antennenspule zum Übertragen niederfrequenter, magnetischer Wechselfelder sowie eine zweite Anzahl von UHF-Empfangsstufen aufweist,
• der Datenträger eine zweite Anzahl (M) orthogonal zueinander ausgerichteter Antennenspulen aufweist, die jede mit einer LF-Empfangsstufe zum Empfangen niederfrequenter, magnetischer Wechselfelder gekoppelt sind,
• der Datenträger ferner eine UHF-Sendestufe aufweist zum Aussenden eines UHF-Signals,
• die Basisstation eine dritte Anzahl von UHF-Empfangsstufen umfasst zum Empfangen des von der UHF-Sendestufe des Datenträgers ausgesandten UHF-Signals,
• die Basisstation und der Datenträger je eine Steuerstufe umfassen zum Steuern der LF- bzw. UHF-Sende- bzw. -Empfangsstufen und zum Erzeugen zu sendender sowie zum Auswerten empfangener Signale,
• aus einer Messung der von den LF-Sendestufen der Basisstation auf den Datenträger übertragenen, niederfrequenten, magnetischen Wechselfelder über die Antennenspulen des Datenträgers in der Steuerstufe des Datenträgers eine erste Positionsinformation über die relative Position des Datenträgers zu den Antennenspulen der Basisstation gewonnen und in vorzugsweise verschlüsselter Form im UHF-Signal vom Datenträger an die Basisstation übertragen wird,
• aus einer anschließenden Messung des von der UHF-Sendestufe des Datenträgers auf die Basisstation übertragenen UHF-Signals über die UHF-Empfangsstufen der Basisstation in der Steuerstufe der Basisstation eine zweite Positionsinformation über die relative Position des Datenträgers zu den UHF-Empfangsstufen der Basisstation gewonnen wird,
• durch Vergleich der beiden Positionsinformationen in der Steuerstufe der Basisstation ein die Zugangsberechtigung darstellendes Signal nur dann erzeugt wird, wenn die beiden Positionsinformationen sich um weniger als ein vorgegebenes Maß unterscheiden.

2. Anordnung nach Anspruch 1,
**dadurch gekennzeichnet, dass** die beiden Positionsinformationen durch Messung der Feldstärken und/oder der Phasenunterschiede der magnetischen Wechselfelder an den Orten der mit je einer der LF-Empfangsstufen gekoppelten Antennenspulen des Datenträgers bzw. des UHF-Signals an den Orten der UHF-Empfangsstufen der Basisstation ermittelt werden.

3. Basisstation für eine Anordnung nach Anspruch 1 oder 2.

4. Datenträger für eine Anordnung nach Anspruch 1 oder 2.
